## Europäisches Patentamt

## European Patent Office

## Office européen des brevets

(19)

(11) Veröffentlichungsnummer: **0 161 410**
**B1**

(12) ## EUROPÄISCHE PATENTSCHRIFT

(45) Veröffentlichungstag der Patentschrift:
**15.07.87**

(51) Int. Cl.⁴: **B 60 N 1/06**

(21) Anmeldenummer: **85102734.2**

(22) Anmeldetag: **11.03.85**

(54) Verstellvorrichtung mit Schrittschaltmechanik.

(30) Priorität: **13.03.84 DE 3409144**

(43) Veröffentlichungstag der Anmeldung:
**21.11.85 Patentblatt 85/47**

(45) Bekanntmachung des Hinweises auf die Patenterteilung:
**15.07.87 Patentblatt 87/29**

(84) Benannte Vertragsstaaten:
**DE FR GB SE**

(56) Entgegenhaltungen:
DE - A - 1 925 778
DE - A - 2 360 312
DE - A - 2 708 461
DE - A - 3 115 942
DE - B - 1 142 767
DE - B - 1 297 496
DE - C - 963 754
FR - A - 1 376 806
FR - A - 2 210 953
FR - A - 2 420 319
US - A - 2 784 770
US - A - 2 892 487
US - A - 4 401 344

(73) Patentinhaber: **C. Rob. Hammerstein GmbH,
Postfach 13 01 18 Merscheiderstrasse 167,
D-5650 Solingen 13 (DE)**
Patentinhaber: **Daimler Benz Aktiengesellschaft,
Stuttgart-Untertürkheim Postfach 202,
D-7000 Stuttgart 60 (DE)**

(72) Erfinder: **Frohnhaus, Ernst-Reiner, Hammerstrasse 13,
D-5650 Solingen 11 (DE)**
Erfinder: **Becker, Burckhard, Dipl.-Ing.,
Obenkatternberg 25, D-5650 Solingen 11 (DE)**
Erfinder: **Bauer, Heinz, Hammerstrasse 9,
D-5650 Solingen 11 (DE)**
Erfinder: **Gedig, Alfred, Dipl.-Ing., Hammerstrasse 28,
D-5650 Solingen 11 (DE)**
Erfinder: **Klink, Josef, Dipl.-Ing., Im Kranich 5,
D-7270 Nagold 1 (DE)**
Erfinder: **Koucky, Antonin, E.-Baslach-Strasse 81,
D-7032 Sindelfingen (DE)**

(74) Vertreter: **Bauer, Wulf, Dr., Wolfgang-Müller-Strasse 12,
D-5000 Köln 51 (Marienburg) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Verstellvorrichtung mit Schrittschaltmechanik, insbesondere als verstellbares Gelenk für eine Sitzhöhenverstellung oder Rückenlehnen-Neigungsverstellung von Kraftfahrzeugsitzen,

a. mit einer Basisplatte, in der eine Achse gelagert ist,
 — deren Drehposition bezüglich der Basisplatte schrittweise verstellbar ist, und
 — die mit einer Schwinge verbunden ist, die auf einem Kreisbogen um die Achse angeordnete Mitnehmerflanken aufweist, und
b. mit einem um die Achse schwenkbaren Handhebel,
 — dem eine eine Neutralstellung sichernde Feder zugeordnet ist, und
 — der zwei Mitnehmer aufweist, von denen je nach Schwenkrichtung jeweils einer bei einer Schwenkbetätigung des Handhebels an eine Mitnehmerflanke anschlägt, diese mitnimmt und dadurch die Schwinge und die Achse dreht.

Bei dieser aus der DE-A-31 15 942 bekannten Verstellvorrichtung wird die Einstellung der Achse durch Hin- und Herschwenken („Pumpen") des Handhebels vorgenommen. Der Handhebel ermöglicht dabei eine relativ grosse und günstige Kraftübersetzung der manuell eingeleiteten Verstellkräfte.

Demgegenüber greift die Stellkraft beispielsweise bei einer mit Handrad ausgerüsteten Verstellvorrichtung, wie sie beispielsweise aus der DE-C-12 97 496 bekannt ist, über einen kürzeren Hebelarm an, was unter anderem dazu führt, dass bei dieser Verstellvorrichtung für eine vorgegebene Winkelverstellung der Achse das Handrad relativ oft gedreht werden muss. Bei der Verstellvorrichtung der eingangs genannten Art lässt sich der Handhebel zu dem griffgünstig anordnen, da der Handgriff einen Abstand von dem Ort hat, an dem sich die Achse befindet. Dies ist ergometrisch günstig.

Nachteilig bei der Verstellvorrichtung der eingangs genannten Art ist jedoch, dass sie im Gegensatz zur Verstellvorrichtung nach der DE-PS 12 97 496 nicht selbstarretierend ist. Sie ermöglicht lediglich eine Verstellung, hält aber eine erreichte Verstellung nicht selbsttätig ein. Hierfür ist bei der bekannten Verstellvorrichtung ein selbsthemmendes Getriebe nachgeschaltet, das im Rückweg angreifende Kräfte, also Kräfte, wie sie beispielsweise über die Rückenlehne oder die Sitzfläche durch den Benutzer in die Verstellvorrichtung eingeleitet werden, von der bekannten Verstellvorrichtung fernhält.

Ein nachgeschaltetes, selbsthemmendes Getriebe oder eine ähnliche Einrichtung zum Selbsthemmen erfordern jedoch zusätzliche Bauteile, Platzbedarf und zusätzliches Gewicht. Weiterhin ist es schwierig, die jeweiligen, ergometrisch günstigen Übersetzungsverhältnisse beizubehalten.

Hiervon ausgehend ist es Aufgabe der Erfindung, die Nachteile der bekannten Verstellvorrichtung zu vermeiden und diese dahingehend weiterzubilden, dass ein selbsttätiges Arretieren des erreichten Verstellzustandes erzielt wird.

Diese Aufgabe wird ausgehend von einer Verstellvorrichtung der eingangs genannten Art dadurch gelöst, dass der Handhebel sich aus einer um die Achse schwenkbaren Koppelschwinge und einem an dieser um eine Gelenkachse schwenkbaren Griffhebel zusammensetzt, wobei die Feder diese Gelenkverbindung von Koppelschwinge und Griffhebel in Neutralstellung hält, dass die zwei vorzugsweise als Zapfen ausgebildeten Mitnehmer an dem Gelenkhebel und beidseits der Gelenkachse angeordnet sind, und dass an der Basisplatte ein Sperriegel schwenkbar gelagert ist, der einen zwischen zwei Zahnflanken lösbar einrastbaren Sperrzahn hat, an dem eine Sperrfeder angreift, die ihn in Sperrichtung vorbelastet und der für jeden Mitnehmer eine Ausrastflanke, die dem Mitnehmer in Neutralstellung des Handhebels unmittelbar gegenüberliegt und eine hieran angrenzende, der Gelenkachse näherliegende und einen grösseren Abstand von dem Kreisbogen der Mitnehmerflanken als die Ausrastflanken aufweisende Bucht hat.

Anstelle eines starren, um die Achse schwenkbaren Handhebels lehrt die Erfindung einen zweigeteilten Handhebel. Dies hat den Vorteil, dass die Mitnehme starr am Griffhebel befestigt sein können. Die Relativbewegung zwischen Griffhebel und Koppelschwinge wird dazu benutzt, die Mitnehmer aus ihrer Neutralstellung alternativ in eine Eingriffstellung zu bringen, so dass durch eine Fortsetzung der Betätigung des Griffhebels direkt ein Antrieb der mit einem Verzahnungsbogen versehenen Schwinge erfolgt.

Bis zu diesem Punkt entspricht die erfindungsgemässe Verstellvorrichtung, wenn auch in anderer konstruktiver Auslegung, in etwa der Verstellvorrichtung nach dem genannten Stand der Technik. Ein entscheidendes Merkmal, das auch die gestellte Aufgabe zu lösen hilft, liegt nun darin, dass der andere, jeweils nicht formschlüssig mit der Schwinge zusammenwirkende Mitnehmer zunächst den Sperriegel in eine Freigabestellung bewegt, wodurch überhaupt erst eine Winkelverstellung der Schwinge möglich ist, aber anschliessend von der Ausrastflanke in die Bucht rutscht, wodurch der Sperrzahn wieder in die Verzahnung der Schwinge eingreifen kann und hierdurch eine Weiterbewegung des Griffhebels blockiert wird.

Dadurch wird insgesamt erreicht, dass unabhängig von der Durchführung der Verstellbewegung stets ein selbsttätiges Einrasten des Sperriegels gewährleistet ist, unabhängig davon, ob der Griffhebel nach kurzer, unvollständiger Verstellstrecke plötzlich losgelassen wird, oder ob während der Verstellbewegung und während der Sperriegel ausgerastet ist im Rückflussweg eine Kraft, beispielsweise unfallbedingt, angreift.

Ein entscheidender Gedanke der Erfindung liegt somit darin, den bei der Verstellvorrichtung nach dem Stand der Technik jeweils nicht benutzten Mitnehmer dafür heranzuziehen, die Bewegung des Sperriegels zu steuern.

Ein besonderer Vorzug der Verstellvorrichtung nach der Erfindung liegt darin, dass sie weitgehend aus Blechstanzteilen gefertigt werden kann, relativ leicht baut, ausgesprochen flach ist, unterschiedliche Übertragungsverhältnissen günstig angepasst werden kann und eine hochelastbare Arretierung der Schwinge auf Grund des Sperriegels zeigt.

In bevorzugter Weiterbildung der Erfindung sind die geometrischen Abstände so gewählt, dass bei Beginn einer Schwenkbetätigung des Griffhebels zunächst ein Mitnehmer zwischen zwei Mitnehmerflanken der Schwinge gelangt, bevor der andere, von der Verzahnung weggeschwenkte Mitnehmer den Sperriegel soweit in die Eingriffsstellung drücken kann, dass der Sperrzahn ausrasten konnte. In Neutralstellung des Handhebels tragen die Mitnehmer nicht zu einer Arretierung der Schwinge bei, diese erfolgt ausschliesslich durch den Sperriegel. Mit der Weiterbildung wird nun erreicht, dass zunächst eine kraftschlüssige Verbindung zwischen dem Handhebel und der Schwinge hergestellt wird, bevor der Sperrzahn des Sperriegels die Schwinge freigibt. Damit noch ein ausreichender Schwenkwinkel des Griffhebels gegenüber der Koppelschwinge möglich ist, um den Sperrzahn vollständig auszurasten, muss der zwischen zwei Mitnehmerflanken eingeschwenkte Mitnehmer ausreichend tief in die Verzahnung eingreifen können, nachdem er sich bereits in Formschluss mit der Verzahnung der Schwinge befindet. Insgesamt wird hierduch eine labile Zwischenstellung, in der der eine Mitnehmer noch nicht eingreift, der andere Mitnehmer aber bereits den Sperrzahn aus der Eingriffposition bewegt hat, vermieden. Dies sichert andererseits, dass nach Beendigung eines Verstellhubes der Sperrzahn zunächst passgenau zwischen zwei Mitnehmerflanken eingreifen kann, bevor der erste Mitnehmer von der Verzahnung der Schwinge freikommt. Dadurch wird eine Fehlrastung, beispielsweise Zahn auf Zahn-Stellung des Sperrzahnes mit den Zähnen der Schwinge ausgeschlossen.

In einer weiteren, vorzugsweisen Ausbildung springt von der Basisplatte ein Anschlag, vorzugsweise in Form eines Zapfens, vor, der sich auf der Verbindungslinie von Achse und Gelenkachse und zwischen diesen Achsen befindet und in ein bogenförmiges Langloch der Koppelschwinge greift. Durch Anschlag an die Enden dieses bogenförmigen Langlochs begrenzt er den Schwenkbereich der Koppelschwinge um die Achse. Zugleich kann dieser Anschlag ein bogenförmiges Langloch in der als Verzahnungssegment ausgebildeten Schwinge durchgreifen, wodurch der Schwenkwinkelbereich dieser Schwinge eingegrenzt ist. Schliesslich kann der zapfenförmige Anschlag als Abstützungspunkt für die Feder genutzt werden, die die beiden Hebel des Handhebels in der Neutralstellung hält.

Die Verstellvorrichtung nach der Erfindung lässt sich neben den genannten, vorzugsweisen Einsatzbereichen bei der Verstellung von Kraftfahrzeugsitzen vorteilhaft überall da einsetzen, wo manuell eine Drehbewegung angetrieben und zu gleich arretiert werden muss, beispielsweise bei der Verstellung von Bettgestellen, Krankenstühlen, bei Winden oder dergleichen.

In vorteilhafter Ausbildung ist bei in Neutralstellung befindlichem Handhebel, bei der der Sperrzahn im Eingriff ist, der Abstand der beiden Zapfen vom Kopfkreis der Verzahnung der Schwinge möglichst gering, ebenso ist auf der anderen Seite der Zapfen der Abstand zu den Ausrastflanken möglichst gering, so dass der Anteil des Schwenkwinkels des Handhebels, der für die Eingriffs- und Steuerfunktion der Mitnehmer notwendig ist, gering bleibt.

Die Schwenkachse des Sperriegels befindet sich vorzugsweise auf der Linie der Kräfte im Eingriffsbereich zwischen Sperrzahn und Mitnehmerflanken, so dass bei einer im Rückflussweg über die Schwinge angreifende Kraft kein Moment auf den Sperriegel ausgeübt wird. Dadurch befindet sich die Achse des Sperriegels in Nähe der Verzahnung der Schwinge, was wiederum zum kompakten Aufbau beiträgt. Andererseits ist aber hierdurch die Steuerfunktion der beiden Mitnehmer unterschiedlich, weil ein Mitnehmer zwangsläufig der Achse des Sperriegels näher liegt als der andere. Um nun zu erreichen, dass der Schwenkwinkel für den Eingriff des entfernteren Mitnehmers derselbe ist wie für den anderen Mitnehmer, wird der entfernere Mitnehmer in einer grösseren Entfernung von der Gelenkachse angeordnet als der Mitnehmer, der der Achse des Sperriegels näher liegt.

In alternativer Ausbildung können auch zwei Sperriegel mit jeweils sägezahnförmigem Sperrzahn vorgesehen sein, die jeweils nur eine Drehrichtung sperren, während in der anderen Drehrichtung ihr Sperrzahn über die Verzahnung der Schwinge hinweggrutscht. Dann wird der jeweils nicht für den Eingriff in die Verzahnung der Schwinge benötigte Mitnehmer herangezogen, den jeweils in der betreffenden Drehrichtung blockierenden Sperriegel freizugeben, während der andere Sperriegel in Eingriffsstellung bleiben kann, da er selbsttätig aus dieser ausrastet.

Schliesslich sind kinematische Umkehrungen möglich, so kann beispielsweise die Schwinge mit einer Innenverzahnung versehen werden, wodurch sich wiederum der Sperriegel innerhalb des Zahnkreises dieser Innenverzahnung befindet, der Aufbau des Handhebels aber beibehalten werden kann, wobei seine Mitnehmer wiederum zwischen Verzahnung der Schwinge und dem Sperriegel angeordnet sind.

Schliesslich können auch zusätzliche Mitnehmer, die am Gelenkhebel angeordnet sind, verwendet werden, um den Sperriegel jeweils auszurasten. Es ist also nicht zwangsläufig notwendig, den jeweils nicht benutzten Mitnehmer für diese Steuerfunktion zu verwenden, obwohl die letztere Lösung aus Gründen der Einfachheit vorgezogen wird.

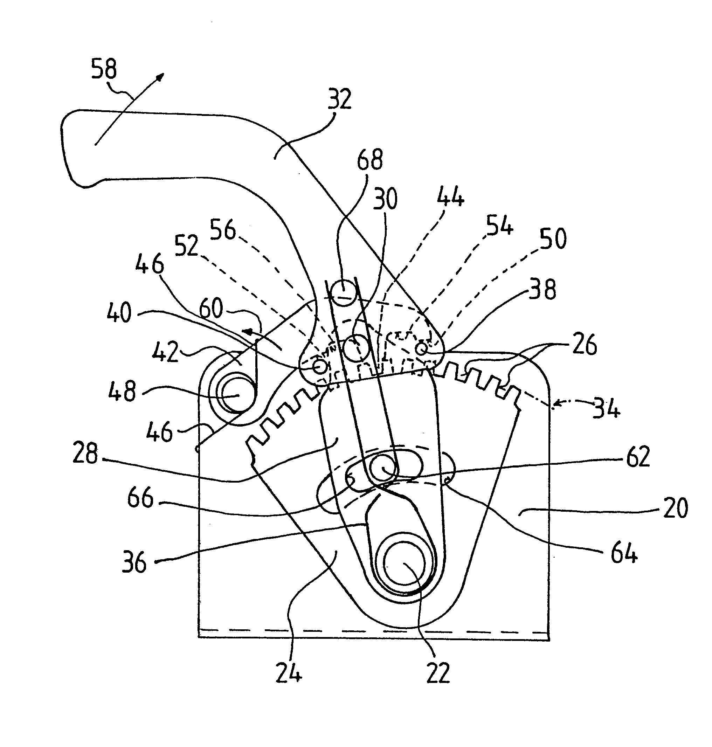

Weitere Vorteile und Merkmale der Erfindung ergeben sich aus den übrigen Ansprüchen sowie der nun folgenden Beschreibung eines bevorzugten Ausführungsbeispiels, das unter Bezugnahme auf die Zeichnung näher erläutert wird. Diese zeigt eine Draufsicht auf eine Verstellvorrichtung nach der Erfindung.

Die in der Zeichnung gezeigte Verstellvorrichtung mit Schrittschaltmechanik ist insbesondere als verstellbares Gelenk für eine Sitzhohenverstellung oder Rückenlehnen-Neigungsverstellung von Kraftfahrzeugsitzen gedacht. Dabei werden bezüglich einer im allgemeinen unbeweglich bleibenden, also ortsfesten Basisplatte 20 die winkellage einer Achse 22, die mit einer Schwinge 24 starr verbunden und in der Basisplatte 20 schwenkbar gelagert ist, schrittweise verstellt und in der erreichten Einstellposition gehalten. Die Schwinge 24 ist als Verzahnungssegment ausgebildet, sie hat Anlageflanken 26 aufweisende, nahezu rechteckförmige Zähne, die konzentrisch zur Achse 22 angeordnet sind.

Die Verstellung erfolgt mittels eines um die Achse 22 schwenkbaren Handhebels, der sich aus einer frei um die Achse 22 schwenkbaren Koppelschwinge 28 und einem wiederum an dieser frei um eine Gelenkachse 30 schwenkbaren Griffhebel 32 zusammensetzt. Die Gelenkachse 30 befindet sich etwas ausserhalb der Zähne der Schwinge 24, spezieller gesagt eines Kopfkreises 34 dieser Zähne. Der Handhebel wird durch eine Feder 36 in der gezeigten Neutralstellung gehalten. Diese wird später näher erläutert.

Am Griffhebel 32 springen zwei als Zapfen ausgebildete Mitnehmer 38, 40 so vor, dass sie mit den Anlageflanken 26 der Schwinge 24 in Eingriff kommen können, ihr Durchmesser ist entsprechend gewählt. In der gezeigten Neutralstellung befindet sie sich jedoch ausserhalb des Kopfkreises 34.

In der gezeigten Neutralstellung wird die Arretierung durch einen an der Basisplatte 20 frei schwenkbar gelagerten Sperriegel 42 gesichert, der mit einem Sperrzahn 44 zwischen zwei Anlageflanken 26 greift und dadurch eine spielfreie Arretierung sichert. Er wird durch eine Sperriegelfeder 46 in der gezeigten Rastposition gehalten und kann um eine Achse 48 verschwenkt werden, die so angeordnet ist, dass ein an der Achse 22 angreifendes Drehmoment nicht zu einem Drehmoment des Sperriegels 42 um seine Achse 48 führt.

Der Sperriegel hat für jeden Mitnehmer 38, 40 jeweils eine Ausrastflanke 50, 52 und eine Bucht 54, 56. Die Ausrastflanken 50, 52 verlaufen in geringem Abstand ausserhalb der Mitnehmer 38, 40 und vorzugsweise konzentrisch zum Kopfkreis 34. Sie gehen zur Gelenkachse 30 hin in eine tiefer eingearbeitete Bucht 54 bzw. 56 über, der Sperrzahn 44 befindet sich zwischen den beiden Buchten 54, 56.

Wird der Griffhebel 32 ausgehend von der gezeigten Neutralstellung im Sinne des Pfeils 58 nach oben gezogen, so bleibt zunächst die Koppelschwinge 28 ortsfest, der Handhebel knickt um seine Gelenkachse 30 ein. Dementsprechend ist die Feder 36 entweder in zwei Einzelfedern aufgeteilt oder (wie dargestellt) als Feder mit Doppelfunktion ausgebildet. Dabei hält die erste Einzelfeder die Koppelschwinge 28 in der gezeigten Position, diese erste Einzelfeder stützt sich an der Basisplatte 20 ab. Die zweite Einzelfeder befindet sich lediglich zwischen den beiden Armen 28, 32 des Handhebels und ist so bemessen, dass bei einer Betätigung des Griffhebels 32 eine Schwenkbewegung der Koppelschwinge 28 zunächst vermieden wird.

Durch die Schwenkbewegung um den Pfeil 58 wird der rechte Mitnehmer 38 zwischen zwei Anlageflanken 26 der Schwinge 24 eingeschwenkt. Zugleichh schlägt der linke Mitnehmer 40 gegen die ihm zugeordnete Ausrastflanke 52 des Griffhebels 32. Dadurch wird der Sperriegel 42 gegen die Sperriegelfeder 46 im Sinne des Pfeils 60 verschwenkt, der Sperrzahn 44 kommt von den Anlageflanken 26 zunehmend frei. Auf Grund der gewählten Geometrie taucht der rechte Mitnehmer 38 zunächst für eine Rastung ausreichend tief zwischen zwei Anlageflanken 26 ein, bevor der Sperrzahn 46 völlig frei von der Verzahnung der Schwinge 24 ist. Dadurch wird eine kontinuierliche Arretierung gesichert.

Bei fortschreitender Betätigung des Griffhebels 32 im Sinne des Pfeils 58 schlägt der Mitnehmer 38 am Fusskreis der Verzahnung der Schwinge 24 an, in diesem Moment ist der Sperrzahn 44 völlig ausgerastet. Nun führt die weitere Bewegung des Griffhebels nicht mehr zu einer weiteren Knickung des Handhebels, vielmehr ist der Griffhebel 32 formschlüssig mit der Schwinge 24 verbunden, so dass jede weitere Schwenkbewegung des Griffhebels 32 im Sinne des Pfeils 58 zu einer Verschwenkung der Schwinge 24 führt. Der zuletzt geschilderte Anteil der Schwenkbewegung des Griffhebels 32 ist also der eigentliche Arbeitshub, zuvor lief lediglich ein Steuerhub ohne Verstellung der Schwinge 24 ab.

Bei Fortsetzung des Arbeitshubs gleitet der linke Mitnehmer 40 von seiner Ausrastflanke 42 in die Bucht 56, die so bemessen ist, dass der Mitnehmer 40 nun den Sperriegel 42 nicht mehr ausreichend im Sinne des Pfeils 60 in die Freigabestellung drückt, vielmehr kann nun der Sperrzahn 44 einfallen. Damit ist zugleich der Arbeitshub für den Benutzer spürbar beendet. Lässt der Benutzer den Griffhebel 32 los oder führt er ihn in Gegenrichtung zurück, so erreicht die Verstellvorrichtung wieder die gezeigte Normalposition, lediglich die Schwinge 24 ist um eine gewisse Zahnzahl im Uhrzeigersinn verschwenkt worden.

Bei einer Betätigung des Griffhebels 32 in die Gegenrichtung laufen die entsprechenden Vorgänge ab, zunächst wiederum ein Steuerhub, wobei diesmal der linke Mitnehmer 40 in die Verzahnung der Schwinge 24 eintaucht und der rechte Mitnehmer 38 zunächst den Sperriegel 31 in die Freigabeposition drückt.

Die Mittelpunkte der zapfenförmigen Mitnehmer 38, 40 und der Gelenkachse 30 befinden sich im wesentlichen auf einem Kreisbogen um die Achse 23. Der linke Mitnehmer 42 hat einen deutlich geringeren Abstand von der Gelenkachse 30 als der rechte Mitnehmer 38, hierduch wird erreicht, dass ein gewisser Schwenkwinkel des Griffhebels 32 unabhängig von der Schwenkrichtung stets zu einer gewissen Ausschwenkbewegung des Sperriegels 42 führt. Dabei kann jedoch ein exakter Ausgleich der Hebelarme nicht erfolgen, da die Mitnehmer 38, 40 bevorzugt so angeordnet werden, dass ihr Abstand vom Sperrzahn 44 in der Normalposition der Periode der Verzahnung der Schwinge 24 entspricht, so dass eine Anlage eines Mitnehmers 38 bzw. 40 auf einen Kopf der Zähne der Schwinge 24 vermieden wird.

Von der Basisplatte 20 springt ein zapfenförmiger Anschlag 62 vor, der einerseits durch ein bogenförmiges Langloch 64 der Schwinge 24 und andererseits durch ein bogenförmiges Langloch 66 der Koppelschwinge 28 greift. Hierdurch wird die Schwenkbewegung beider Teile begrenzt.

Die Feder 36 ist eine Blattfeder, die die Achse 22 umschlingt und mit zwei Schenkeln zum Griffhebel 32 vorspringt. Diese Schenkel überkreuzen sich auf dem Wege zum Anschlag 62, an den die Schenkel ebenfalls anliegen, von da aus verlaufen die Schenkel gradlinig, sie liegen jeweils an der Gelenkachse 30 und einem Zapfen 68 des Griffhebels 32 an, dieser Zapfen 68 befindet sich ausserhalb der Gelenkachse 30.

Die Koppelschwinge 28 hat in ihrem oberen Bereich eine Form, die die Bewegung der Mitnehmer 38, 40 nicht behindert. Sie kann aber auch zur Gelenkachse 30 zentrierte Bogenführungen für die Mitnehmer 38, 40 aufweisen.

Die Basisplatte 20, die Schwinge 24, die Koppelschwinge 28 und der Griffhebel 32 können als flache Blechstanzteile ausgeführt werden, insgesamt ist die Konstruktion der Vorrichtung relativ einfach und aus wenigen Einzelteilen ausgeführt. Grundsätzlich kann anstelle der Schwinge 24 auch ein kreisrundes Zahnrad eingesetzt werden, dann sind nur andere Mittel notwendig, um die Neutrallage des Handhebels zu sichern, bzw. darf der Zapfen 68 nicht die kreisrunde Schwinge 24 durchgreifen.

**Patentansprüche**

1. Verstellvorrichtung mit Schrittschaltmechanik, insbesondere als verstellbares Gelenk für eine Sitzhöhenverstellung oder Rückenlehnen-neigungsverstellung von Fahrzeugsitzen,
a. mit einer Basisplatte (20), in der eine Achse (22) gelagert ist,
   – deren Drehposition bezüglich der Basisplatte (20) schrittweise verstellbar ist, und
   – die mit einer Schwinge (24) verbunden ist, die auf einem Kreisbogen um die Achse (22) angeordnete Mitnehmerflanken (26) aufweist, und
b. mit einem um die Achse (22) schwenkbaren Handhebel (28, 32),
   – dem eine eine Neutralstellung sichernde Feder (36) zugeordnet ist, und
   – der zwei Mitnehmer (38, 40) aufweist, von denen je nach Richtung eine Schwenkbetätigung des Handhebels einer an eine Anlageflanke (26) anschlägt, diese mitnimmt und dadurch die Schwinge (24) und die Achse (22) dreht, dadurch gekennzeichnet, dass der Handhebel sich aus einer um die Achse (22) schwenkbaren Koppelschwinge (28) und einem an dieser um eine Gelenkachse (30) schwenkbaren Griffhebel (32) zusammensetzt, wobei die Feder (36) diese Gelenkverbindung von Koppelschwinge (28) und Griffhebel (32) in Neutralstellung hält, dass die zwei vorzugsweise als Zapfen ausgebildeten Mitnehmer (38, 40) an dem Gelenkhebel (32) und beidseits der Gelenkachse (30) angeordnet sind, und dass an der Basisplatte (20) ein Sperriegel (42) schwenkbar gelagert ist,
   – der einen zwischen zwei Anlageflanken (26) lösbar einrastbaren Sperrzahn (44) hat, an dem eine Sperriegelfeder (46) angreift, die ihn in Sperrichtung vorbelastet,
   – der für jedem Mitnehmer (38, 40)
      i. eine Ausrastflanke (50, 52), der den Mitnehmern (38, 40) in Neutralstellung des Handhebels unmittelbar gegenüberliegt, und
      ii. eine hieran angrenzende, der Gelenkachse (30) näherliegende und einen grösseren Abstand von dem Kopfkreis (34) der Anlageflanken (26) als die Ausrastflanken (50, 52) aufweisenden Bucht (54, 56) hat.

2. Verstellvorrichtung nach Anspruch 1, dadurch gekennzeichnet, dass ausgehend von der Neutralstellung der Schwenkwinkel des Griffhebels (32) um die Gelenkachse (30) bis zu einer Stellung, in der ein Mitnehmer (zum Beispiel 38) für eine Arretierung ausreichend tief an einer Anlageflanke (26) anliegt, kleiner ist als der Schwenkwinkel, der notwendig ist, um mit dem anderen Mitnehmer (40) den Sperrzahn (44) vollständig ausser Eingriff zu bringen.

3. Verstellvorrichtung nach Anspruch 2, gekennzeichnet durch eine, eine vollständige Ausrastung des Sperrzahns (44) nach Eingriff eines Mitnehmers (38) an eine Anlageflanke (26) ausreichend lang bemessene Anlageflanke (26).

4. Verstellvorrichtung nach einem der Ansprüche 1 bis 3, dadurch gekennzeichnet, dass die Ausrastflanken (50, 52) sich auf einem Kreisbogen um die Achse (22) befinden, dessen Radius etwas grösser ist als der Radius des Kopfkreises (34) plus dem Durchmesser der zapfenförmigen Mitnehmer (38, 40) plus etwas Luft beidseitig dieser Mitnehmer (38, 40).

5. Verstellvorrichtung nach einem der Ansprüche 1 bis 4, dadurch gekennzeichnet, dass sich die beiden Mitnehmer (38, 40) in einem unterschiedlichen, den unterschiedlichen Hebelwegen angepassten Abstand von der Gelenkachse (30) befinden, so dass unabhängig von der Schwenkrichtung des Griffhebels (32) eine gewisse Schwenkbewegung des Sperriegels (42) erreicht wird.

6. Verstellvorrichtung nach einem der Ansprüche 1 bis 5, dadurch gekennzeichnet, dass der Abstand der beiden Mitnehmer (38, 40) ein Vielfaches des Zahnabstandes der Verzahnung der Swinge (24) ist.

7. Verstellvorrichtung nach einem der Ansprüche 1 bis 6, dadurch gekennzeichnet, dass an der Basisplatte (20) ein zapfenförmiger Anschlag (62) vorspringt, der ein bogenförmiges Langloch (64) in der Schwinge (24) und/oder ein bogenförmiges Langloch (66) in der Koppelschwinge (28) durchgreift.

8. Verstellvorrichtung nach einem der Ansprüche 1 bis 7, dadurch gekennzeichnet, dass die Feder (36) eine Blattfeder ist, die die Achse (21) umschlingt, unter Kreuzung ihrer Schenkel am Anschlag (62) beidseits anliegt und anschliessend zunächst die gelenkachse (30) und schliesslich einen Zapfen (68) des Griffhebels (32) beidseitig umgreift.

9. Verstellvorrichtung nach einem der Ansprüche 1 bis 8, dadurch gekennzeichnet, dass sich am Sperriegel (42) beidseits des Sperrzahns (44) jeweils eine Bucht (54, 56) befindet, die weiter nach aussen hin in eine Ausrastflanke (50, 52) übergeht.

## Claims

1. Adjusting device having a stepping mechanism, especially as adjustable joint for the seat height adjustment or backrest angle adjustement of vehicle seats,
a. having a base plate (20) in which a shaft (22) is mounted,
the rotary position of which with respect to the base plate (20) can be adjusted stepwise, and which is connected to a rocker (24) which has driving edges arranged on an arc about the shaft (22), and
b. having a hand lever (28, 32) that can be pivoted about the shaft (22),
with which there is associated a spring (36) ensuring a neutral position, and
which has two drive dogs (38, 40) one of which, depending on the direction of a pivot actuation of the hand lever, strikes against a stop edge (26), drives the latter along and thereby turns the rocker (24) and the shaft (22),
characterised in that
the hand lever is composed of a coupler rocker (28) that can be pivoted about the shaft (22) and a grip lever (32) that can be pivoted on the latter about a link shaft (30), the spring (36) maintaining this link connection of the coupler rocker (28) and grip lever (32) in a neutral position,
the two drive dogs (38, 40), preferably in the form of pins, are arranged on the link lever (32) and on each side of the link shaft (30), and
there is pivotally mounted on the base plate (20) a locking catch (42)
which has a locking tooth (44) that can be detachably engaged between two stop edges (26) and on which a locking catch spring (46) acts which biasses it in the locking direction, and
which has for each drive dog (38, 40)
i. a disengaging edge (50, 52) which, in the neutral position of the hand lever, lies directly opposite the drive dogs (38, 40), and
ii. a recess adjacent thereto, lying closer to the joint shaft (30) and having a greater distance from the tip circle (34) of the stop edges (26) than do the disengaging edges (50, 52).

2. Adjusting device according to claim 1, characterised in that proceeding from the neutral position, the pivoting angel of the grip lever (32) about the link shaft (30) up to a position in which one drive dog (for example 38) lies sufficiently deeply against a stop edge (26) for a stopping action is smaller than the pivoting angle necessary for complete disengagement of the locking tooth (44) by the other drive dog (40).

3. Adjusting device according to claim 2, characterised by a stop edge (26) of sufficient length to bring about complete disengagement of the locking tooth (44) after engagement of a drive dog (38) on a stop edge (26).

4. Adjusting device according to one of claims 1 to 3, characterised in that the disengaging edges (50, 52) are on an arc about the shaft (22), the radius of which is slightly larger than the radius of the tip circle (34) plus the diameter of the peg-shaped drive dog (38, 40) plus a small amount of clearance on both sides of these drive dogs (38, 40).

5. Adjusting device according to one of claims 1 to 4, characterised in that the two drive dogs (38, 40) are at a different distance, adapted to the different lever paths, from the link shaft (30) so that regardless of the pivoting direction of the grip lever (32) a certain pivoting action of the locking catch (42) is achieved.

6. Adjusting device according to one of claims 1 to 5, characterised in that the distance of the two drive dogs (38, 40) is a multiple of the tooth pitch of the toothing of the rocker (24).

7. Adjusting device according to one of claims 1 to 6, characterised in that there projects at the base plate (20) a peg-shaped stop (62) which passes through an arcuate longitudinal hole (64) in the rocker (24) and/or an arcuate longitudinal hole (66) in the coupler rocker (28).

8. Adjusting device according to one of claims 1 to 7, characterised in that the spring (36) is a leaf spring which surrounds the shaft (22) and with its legs intersecting, rests on both sides of the stop (62), and then engages, on both sides, first the link shaft (30) and finally a peg (68) of the grip lever (32).

9. Adjusting device according to one of claims 1 to 8, characterised in that on the locking catch (42) on each side of the locking tooth (44) there is a recess (54, 56) which, in an outward direction, runs into a disengaging edge (50, 52).

## Revendications

1. Dispositif de manœuvre comportant un mécanisme de commande échelonnée, notamment utilisable comme articulation manœuvrable pour un dispositif de réglage de hauteur d'assise ou un dispositif de réglage d'inclinaison de dossier de sièges de véhicule automobile comportant:
a. une plaque de base (20) dans laquelle est monté un axe (22),
   — dont la position angulaire par rapport à la plaque de base (20) est réglable de façon échelonnée, et
   — qui est reliée à une coulisse (24) qui comporte des flancs d'entraînement (26) disposés sur un arc de cercle autour de l'axe (22), et

b. un levier manuel (28, 32) pouvant pivoter autour de l'axe (22),
   - qui est associé à un ressort (36) maintenant une position neutre, et
   - qui comporte deux entraîneurs (38, 40), qui s'appliquent chacun, en fonction de leurs sens de rotation respectifs lors d'un actionnement du levier manuel par pivotement, contre un flanc de butée (26) pour assurer son entraînement et pour faire tourner ainsi la coulisse (24) et l'axe (22),

caractérisé en ce que le levier manuel se compose d'une coulisse d'accouplement (28) pouvant pivoter autour de l'axe (22) et d'un levier de prise (32) pouvant pivoter sur celle-ci autour d'un axe d'articulation (30), le ressort (36) maintenant en position neutre cette liaison articulée de la coulisse d'accouplement (28) et du levier de prise (32), en ce que les deux entraîneurs (38, 40) agencés de préférence sous forme de tourillons sont disposés sur le levier de prise (32) et de chaque côté de l'axe d'articulation (30), et en ce que sur la plaque de base (20) est monté de façon pivotante un verrou de blocage (42),

- qui comporte une dent de blocage (44) pouvant s'emboîter de façon séparable entre deux flancs de butée (26), sur laquelle s'accroche un ressort (46) de verrou de blocage, qui le sollicite dans la direction de blocage,
- qui comporte pour chaque entraîneur (38, 40):
   i. un flanc de déblocage (50, 52), qui est placé directement en regard des entraîneurs (38, 40) dans la position neutre du levier manuel, et
   ii. un évidement adjacent, rapproché de l'axe d'articulation (30) et qui est plus éloigné du cercle de tête (34) des flancs de butée (26) que les flancs de déblocage (50, 52).

2. Dispositif de manœuvre selon la revendication 1, caractérisé en ce que, à partir de la position neutre, l'angle de pivotement du levier de prise (32) autour de l'axe d'articulation (30) jusque dans une position où un entraîneur (par exemple 38) s'applique pour produire un arrêt suffisamment profondément contre un flanc de butée (26) est plus petit que l'angle de pivotement qui est nécessaire pour désaccoupler complètement la dent de blocage (44) par rapport à l'autre entraîneur (40).

3. Dispositif de manœuvre selon la revendication 2, caractérisé par un flanc de butée (26) qui est dimensionné suffisamment long pour permettre un désaccouplement complet de la dent de blocage (44) après accrochage d'un entraîneur (38) avec un flanc de butée (26).

4. Dispositif de manœuvre selon une des revendications 1 à 3, caractérisé en ce que les flancs de déblocage (50, 52) sont situés sur un arc de cercle centré sur l'axe (22) et dont le rayon est un peu plus grand que le rayon du cercle de tête (34) plus le diamètre des entraîneurs (38, 40) en forme de tétons, plus un léger jeu de part et d'autre desdits entraîneurs (38, 40).

5. Dispositif de manœuvre selon une des revendications 1 à 4, caractérisé en ce que les deux entraîneurs (38, 40) sont placés à une distance différente, adaptée aux courses différentes de leviers, de l'axe d'articulation (30), de telle sorte qu'on obtienne, indépendamment de la direction de pivotement du levier de prise (32), un certain mouvement de pivotement du verrou de blocage (42).

6. Dispositif de manœuvre selon une des revendications 1 à 5, caractérisé en ce que l'espacement des deux entraîneurs (38, 40) est un multiple de l'espacement entre dents de la denture de la coulisse (24).

7. Dispositif de manœuvre selon une des revendications 1 à 6, caractérisé en ce que de la plaque de base (20) fait saillie une butée (62) en forme de téton, qui est engagée dans un trou oblong (64) de profil incurvé ménagé dans la coulisse (24) et/ou dans un trou oblong (66) de profil incurvé ménagé dans la coulisse d'accouplement (28).

8. Dispositif de manœuvre selon une des revendications 1 à 7, caractérisé en ce que le ressort (36) est une lame élastique qui entoure l'axe (21), qui s'applique avec croisement de ses branches des deux côtés contre la butée (62) et qui entoure ensuite des deux côtés initialement l'axe d'articulation (30) et enfin un téton (68) du levier de prise (32).

9. Dispositif de manœuvre selon une des revendications 1 à 8, caractérisé en ce qu'il est prévu sur le verrou de blocage (42) de part et d'autre de la dent de blocage (44) respectivement un évidement (54, 56) qui se prolonge en outre vers l'extérieur par un flanc de déblocage (50, 52).